# EUROPEAN PATENT SPECIFICATION

(11) **EP 2 820 097 B1**
(45) Date of publication and mention of the grant of the patent: **01.08.2018**
(21) Application number: 13710918.7
(22) Date of filing: 21.02.2013
(51) Int. Cl.: C09D 183/04, B32B 5/16, B32B 3/30, C09D 183/08, C09D 183/14

(54) **SHEETING ARTICLE WITH RELEASE COATING COMPRISING POLYORGANOSILOXANE AND HYDROPHILIC COMPONENT**
FLÄCHENFÖRMIGER GEGENSTAND MIT TRENNBESCHICHTUNG UMFASSEND POLYORGANOSILOXAN UND HYDROPHILEN BESTANDTEIL
ARTICLE EN FEUILLE À REVÊTEMENT ANTIADHÉSIVE COMPRENANT DU POLYORGANOSILOXANE ET UN COMPOSANT HYDROPHILE

(30) Priority: 28.02.2012 US 201261604069 P; 30.11.2012 US 201261731743 P
(43) Date of publication of application: 07.01.2015
(73) Proprietor: 3M Innovative Properties Company, St. Paul, MN 55133-3427 (US)
(72) Inventor: IYER, Suresh, S., Saint Paul, Minnesota 55133-3427 (US); KRISHNAN, Vivek, Saint Paul, Minnesota 55133-3427 (US); WILDING, Matthew, D., Saint Paul, Minnesota 55133-3427 (US); BUDD, Kenton, D., Saint Paul, Minnesota 55133-3427 (US); YANG, Yu, Saint Paul, Minnesota 55133-3427 (US); MACKEY, Sonja, S., Saint Paul, Minnesota 55133-3427 (US)
(74) Representative: Vossius & Partner Patentanwälte Rechtsanwälte mbB
(86) International application number: PCT/US2013/027023
(87) International publication number: WO 2013/130324

(56) References cited:
- WO-A2-2006/011117
- US-A- 4 988 555
- US-B1- 6 271 293

## Description

### Background

Pavement marking tapes generally comprise a retroreflective viewing surface and an opposing non-viewing surface that typically comprises a pressure sensitive adhesive for bonding the marking tape to a pavement surface. When the pavement marking tape is available as a "roll-good", the tape is wound upon itself such that the pressure sensitive adhesive is in contact with the viewing surface. In such roll-goods, the viewing surface comprises a release coating to insure that the pressure sensitive adhesive will cleanly release from the viewing surface when the tape is unwound.
US 6,271,293 B1 deals with non-staining coating compositions. WO 2006/011117 A2 discloses coating materials and fiber optic sensors using these materials. US 4,988,555 is directed to retroreflective sheets.

### Summary

It has been found that some release coatings are less susceptible to dirt accumulation, which in turn can contribute to an increase in retained retroreflective brightness and/or reduced change in color. Thus, industry would find advantage in articles that comprise such release coating.

According to the present invention a retroreflective sheeting article is described wherein the retroreflective viewing surface comprises a release coating which comprises polyorganosiloxane and at least 15 wt% of hydrophilic units.

The release coating comprises polyorganosiloxane polymer and at least 15 wt-% of hydrophilic units. In one embodiment, the hydrophilic units are ethylene oxide repeat units. In some embodiments, the opposing surface to the release coating typically comprises a pressure sensitive adhesive. The release coating contacts the pressure sensitive adhesive (i.e. prior to use). However, in other embodiments the release coating may be employed as a surface coating to reduce dirt accumulation and may not come in contact with a pressure sensitive adhesive.

Also described is a method of making a (e.g. retroreflective) sheeting comprising a release coating and methods of using the sheeting.

Further, a release coating is described comprising at least one polyorganosiloxane polymer comprising at least one first functional group and at least one hydrophilic component having a second functional group, wherein the first and second functional groups covalently bond and the release coating comprises at least 10 wt-% of hydrophilic units.

In addition, a hydrophilic component is described comprising a polyalkylene oxide backbone and at least one alkoxy silane terminal group wherein the polyalkylene oxide backbone is bonded to the alkoxy silane terminal group with a linking group comprising a urethane or sulfur linkage.

### Brief Description of the Drawing

FIG. 1 is a cross-sectional view of an illustrative pavement marking of the invention; and
FIG. 2 is a photograph of the retroreflective viewing surface of an illustrative pavement marking tape.

### Detailed Description

Retroreflection describes the mechanism where light incident on a surface is reflected so that much of the incident beam is directed back toward its source. The use of (e.g. flat) retroreflective sheeting for signage and (e.g. flat or patterned) pavement markings tapes to guide and direct motorists traveling along a roadway are known.

The present invention will be described in greater detail with reference to a preferred class of sheeting articles, i.e. retroreflective pavement marking tapes, but is generally useful for any sheeting product, especially those for outdoor usage.

Preformed pavement marking tapes are generally classified as "flat" tapes or "patterned" tapes. The patterned tape typically comprises a plurality of protrusions. The protrusions provide retroreflective surfaces that are substantially vertical relative to the (e.g. pavement) surface to which the article is applied. Many flat pavement marking tapes rely on an exposed-lens optical system comprising transparent microspheres (i.e., optical elements) partially embedded in a binder layer containing reflective pigment particles. Enclosed- lens pavement marking tapes are also known, such as described in WO97/01677.

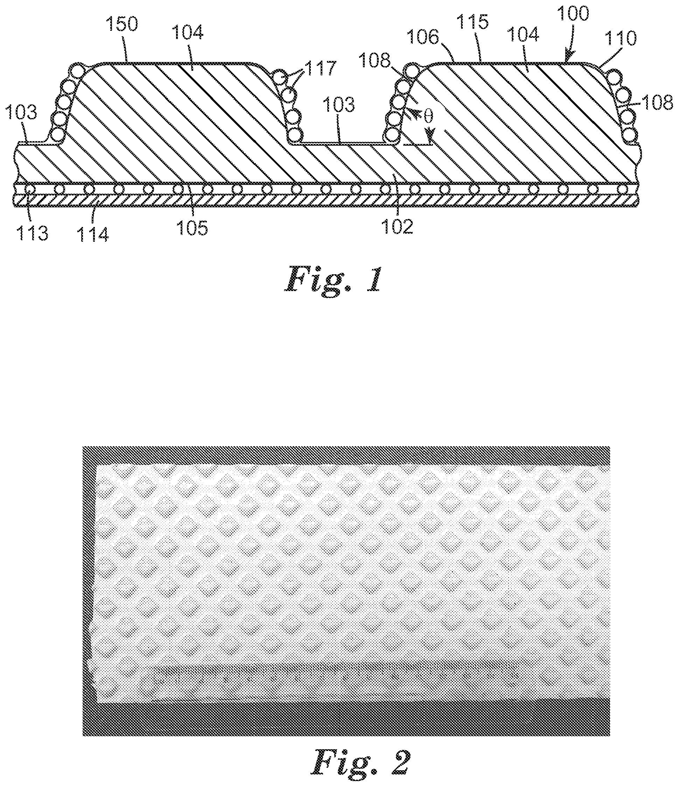

FIG. 1 shows one embodiment of an illustrative patterned pavement marking tape 100 containing a resilient polymeric base sheet 102 and a plurality of protrusions 104. For illustrative purposes, only one protrusion 104 comprises microspheres. Base sheet 102 has front retroreflective viewing surface from which the protrusions 104 extend. The opposing surface to the retroreflective viewing surface (e.g. back surface 105) comprises a pressure sensitive adhesive layer 114. Optionally, other (e.g. primer) coating or other layers, such as scrim 113, may be disposed between the adhesive and back surface 105.

Protrusion 104 has (e.g. horizontal) top surface 106 and (e.g. vertical) side surfaces 108. As shown, side surfaces 108 meet top surface 106 at a rounded top portion 110. Side surfaces 108 preferably form an angle (theta) ranging from about 60 to 80 degrees at the intersection of front surface 103 with lower portion 112 of side surfaces 108. Protrusion 104 is coated with a binder layer 115. Embedded in the binder layer 115, at least at side surfaces 108 of the protrusions are microspheres 117. A mixture of microspheres having different refractive indices may be used to obtain dry and wet retroreflectivity, such as described in US 5,777,791. For example, a first type of microsphere, having a refractive index of at least 1.7, may be used in combination with a second microsphere, having a refractive index of at least 1.9. The retroreflective viewing surface may further comprise skid particles (not shown). The viewing surface further comprises a release coating 150.

For embodiments wherein the sheeting is retroreflective, the binder layer typically comprises a specular reflecting or diffusely reflecting pigment dispersed in a polymeric binder layer 115. However, for other embodiments, the binder layer may light transmissive, e.g. transmitting at least 70%, or 80% and preferably 90% of visible light.

Illustrative examples of suitable polymeric binder layer materials include thermoset materials and thermoplastic materials. Suitable polymeric material includes, but is not limited to, urethanes, epoxies, alkyds, acrylics, acid olefin copolymers such as ethylene/methacrylic acid, polyvinyl chloride/polyvinyl acetate copolymers, etc.

An example of a useful specular pigment is a pearlescent pigment. Useful pearlescent pigments include, but are not limited to, AFFLAIR™ 9103 and 9119 (obtained from EM Industries, Inc., N.Y.), Mearlin Fine Pearl #139V and Bright Silver #139Z (obtained from The Mearl Corporation, Briarcliff Manor, N.Y.). Titanium dioxide is a commonly used diffusely reflecting pigment.

A wide variety of optical elements have been described for use in retroreflective sheeting. The optical elements are generally exposed-lens. Exposed-lens is defined herein as having at least a portion of the optical element open to the air upon initial application (e.g. to a traffic-bearing surface).

The layer of optical elements may comprise optical elements having the same, or approximately the same refractive index. Alternatively, the layer of optical elements may comprise optical elements having two or more refractive indices. Typically, for optimal retroreflective effect, the optical elements have a refractive index ranging from about 1.5 to about 2.0 for optimal dry retroreflectivity, preferably ranging from about 1.7 to about 1.95. For optimal wet retroreflectivity, the optical elements have a refractive index ranging from about 1.7 to about 2.4, preferably ranging from about 1.9 to 2.45.

Generally, optical elements have an average diameter of at least about 50, 100 or 150 microns. The average diameter of the optical elements is typically no greater 1000, 500, or 350. The optical element layer may comprise optical elements having the same, or approximately the same average diameter. Alternatively, the optical element layer may comprise optical elements having two or more average diameters. Blends of optical elements having both different average diameter and refractive index may be used.

The optical elements comprise an amorphous phase, a crystalline phase, or a combination, as desired. The optical elements preferably comprise inorganic materials that are not readily susceptible to abrasion. Suitable optical elements include, for example, microspheres formed of glass, such as soda-lime-silicate glasses, as well as ceramic microspheres. The optical elements can be colored to retroreflect a variety of colors.

In another embodiment, the retroreflective sheeting may comprise glass or ceramic beads partially embedded in a transparent spacing layer that "cups" the optical elements as described for examples in U.S. 6,479,132. This embodiment typically employs a thin metallic film disposed beneath (relative to the viewing surface) the spacing layer. These thin metallic films may be applied by precipitation (e.g., precipitation of silver nitrate), thermal evaporation in a vacuum, sputtering, and chemical methods (e.g., electrodeposition, chemical vapor deposition). Resistive heating of aluminum is the presently preferred method of coating thin metallic films.

Various pavement marking tapes are known including for example U.S. Pat. Nos. 4,388,359; 4,988,555; 5,777,791; 6,365,262; 5,676,488; 4,248,932; 5,227,221; and 5,683,746.

Sheeting comprising glass or ceramic beads at least partially embedded in a binder have also been used for decorative uses; such as described in U.S. Pat. Nos. 5,620,775 and 6,060,157.

Pressure sensitive adhesive coated flat (i.e. unpatterned, lacking protrusions) or patterned (e.g. retroreflective) sheeting can be wound into a roll such that the pressure sensitive adhesive layer 114 on back surface 105 is in contact with the (e.g. retroreflective) viewing surface. Alternatively, precut pieces of sheeting may be stacked onto each other such that the pressure sensitive adhesive layer 114 of one piece contacts the viewing surface of a second adjacent piece of the stack. In such embodiments, release coating 150 to insure that the pressure sensitive adhesive will cleanly release from the viewing surface when the tape is unwound.

The release coating described herein comprises a siloxane polymer, i.e. a polyorganosiloxane, and an appreciable amount of hydrophilic units. The hydrophilic units are typically derived by combining the polyorganosiloxane with a hydrophilic polymeric component (i.e. comprising hydrophilic repeat units). This combination may be an unreacted mixture or a reaction product thereof. In either embodiment, the polyorganosiloxane (i.e. organosiloxane polymer) is typically free of alkylene oxide repeat units, such as polyethylene and/or polypropylene oxide repeat units.

In some embodiments, the release coating comprises a mixture of at least one polyorganosiloxane and at least one hydrophilic component. In this embodiment, the polyorganosiloxane may be "non-functionalized". As used herein "non-functionalized" refers to a polyorganosiloxane that lacks functional groups that will covalently bonded with the hydrophilic component. In this embodiment, the organosiloxane backbone typically comprises alkyl and/or aryl substituents consisting of carbon, hydrogen, and in some embodiments, halogen (e.g., fluorine) atoms, as depicted by the following formula: 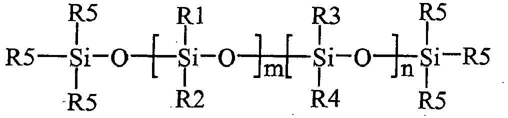 wherein R1, R2, R3, and R4 are independently comprise an alkyl group or aryl group, each R5 is independently a (C₁-C₄) alkyl group and n and m are integers, and at least one of m or n is not zero.

In some embodiments, R5 is a methyl group, i.e., the non-functionalized polydiorganosiloxane material is terminated by trimethylsiloxy groups. In some embodiments, R1 and R2 are alkyl groups and n is zero, i.e., the material is a poly(dialkylsiloxane). In some embodiments, n is zero and the R1 and R2 alkyl groups are methyl groups, i.e., poly(dimethylsiloxane) ("PDMS"). In some embodiments, R1 is an alkyl group, R2 is an aryl group, and n is zero, i.e., the material is a poly(alkylarylsiloxane). In some embodiments, R1 is methyl group and R2 is a phenyl group, i.e., the material is poly(methylphenylsiloxane). In some embodiments, R1 and R2 are alkyl groups and R3 and R4 are aryl groups, i.e., the material is a poly(dialkyldiarylsiloxane). In some embodiments, R1 and R2 are methyl groups, and R3 and R4 are phenyl groups, i.e., the material is poly(dimethyldiphenylsiloxane). In some embodiments, the polyorganosiloxane is free of aromatic substituents.

When a non-functionalized polyorganosiloxane is utilized in combination with a hydrophilic component, an (i.e. unreactive/unreacted) mixture is formed.

In other embodiments, the release coating comprises at least one functional polyorganosiloxane, i.e. a polyorganosiloxane that comprises functional groups. A functional polyorganosiloxane may be represented by the above formula wherein at least one (e.g. terminal) R5 is a functional group such as hydroxyl (forming a terminal silanol group) or an alkoxy group (forming an alkoxy silane group). The functional polyorganosiloxane may be monofunctional, e.g. having a single terminal functional group. In some embodiments, the polyorganosiloxane is difunctional, having terminal functional groups on both ends of a linear polyorganosiloxane backbone. The release coating is typically not moisture curable.

In some embodiments, the functional group(s) of the polyorganosiloxane do not covalently bond with the hydrophilic component. For example, alkoxy silane groups of a polyorganosiloxane do not form covalent bonds with a hydroxyl group of a polyethylene oxide alcohol, carboxyl methyl cellulose, or polyvinyl alcohol (PVA). Thus, this combination also forms a mixture, rather than a reaction product.

In other embodiments, the release coating is the reaction product of at least one polyorganosiloxane comprising at least one first functional group and at least one other hydrophilic component comprising a second functional group. The first and second functional groups covalently bond. The first and second functional groups typically covalently bond via thermal or radiation curing. Illustrative first functional of the polyorganosiloxane include silanol and substituted silanes, such as an alkoxy silane. In this embodiment, the hydrophilic component also typically comprises silanol or alkoxy silane second functional groups. Illustrative alkoxy-functional polydiorganosiloxanes include DMS-XE ethoxy terminated polydimehyl siloxane and DMS-XM11 methoxy terminated polydimethylsiloxane, available from Gelest, Inc (reported by the supplier to have a molecular weight of 700 to 1400 g/mole).

A representative reaction scheme of a polydimethylsiloxane (PDMS) comprising an (e.g. alkoxy silane) first functional group and a polyethylene oxide component comprising an (e.g. alkoxy silane) second functional group is as follows: 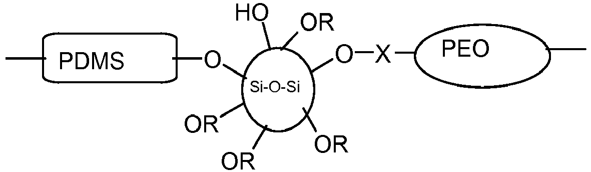 wherein PEO is polyethylene oxide, X is a divalent linking group, and R is hydrogen, methyl or Si-O.

Exemplary hydroxyl-functional polyorganosiloxanes include silanol-terminated polydimethylsiloxanes including, e.g., those available from Gelest, Inc., Morrisville, Pennsylvania, including those available under the trade names DMS-S12, -S14, -S15, -S21, -S27, -S31, -S32, -S33, - S35,- S42, -S45, and -S51; and those available from Dow Corning Corporation, Midland, Michigan, including those available under the trade names XIAMETER OHX Polymers and 3-0084 Polymer, 3-0113 Polymer, 3-0133 Polymer, 3-0134 Polymer, 3-0135 Polymer, 3-0213 Polymer, and 3-3602.

In some embodiments, the functionalized polyorganosiloxane is (e.g. thermally) condensation-curable, such as when the polyorganosiloxane (an optionally the hydrophilic component) comprises alkoxy silane or silanol groups. Various catalysts can be utilized in such condensation curing reactions including for example organotin catalysts. In other embodiments, hydroxyl-functional polyorganosiloxane and hydroxyl functional hydrophilic components, can be condensation cured via exposure to ultraviolet (UV) radiation, by addition of a UV activated acid, such as Ph₂I⁺X⁻, wherein X is BF₄⁻, AsF₆⁻, PF₆⁻, SbF₆⁻, ⁻C(SO₂CF₃)₂.

Polyorganosiloxanes materials may be oils, fluids, gums, elastomers, or resins, e.g., friable solid resins. Generally, lower molecular weight, lower viscosity materials are referred to as fluids or oils, while higher molecular weight, higher viscosity materials are referred to as gums; however, there is no sharp distinction between these terms. Elastomers and resins have even higher molecular weights that gums, and typically do not flow. In some embodiments, the polyorganosiloxane of the release coating described herein is characterized as a "fluid" or "oil" referring to a material having a dynamic viscosity at 25°C of no greater than 1,000,000 mPa•sec (e.g., less than 600,000 mPa•sec).

In some embodiments, the polyorganosiloxane has a molecular weight of at least 250 g/mole or 500 g/mole and typically no greater than 20,000 g/mole, or 10,000 g/mole, or 5,000 g/mole. In some embodiments, the polyorganosiloxane has a molecular weight of no greater than 4,000 g/mole, 3,000 g/mole, or 2,000 g/mole. In other embodiments, the molecular weight of the polyorganosiloxane (e.g. of the aqueous emulsion) can range up to about 1,000,000 g/mole. Unless specified otherwise, molecular weight refers to number average molecular weight throughout the application.

The release coating comprises at least one hydrophilic component. Such hydrophilic component is typically a polymer comprising hydrophilic repeat units.

Hydrophilic polymers contain polar group, rendering the hydrophilic polymer soluble in water. Hydrophilic polymers are typically grouped by the chemistry of their structure. Various hydrophilic components are known including for example polyethers and in particular components comprising ethylene oxide repeat units, propylene oxide repeat units, and mixtures thereof; polymers comprising hydroxyl groups such as polyvinyl alcohol (PVA) and carboxyl methyl cellulose and (e.g. sodium) salts thereof; and polyvinylpyrrolidone. In one favored embodiment, the release coating comprises ethylene oxide repeat units derived from a polyethylene oxide component.

In one embodiment, the hydrophilic (e.g. polymer) component (e.g. comprising ethylene oxide repeat units or hydroxyl groups) comprises a second functional group, such as an alkoxy silane group, that covalently bonds with the first functional group of the polyorganosiloxane. In this embodiment, the release coating can be prepared from and comprise a reaction product of a polyethylenoxyalkylalkoxy silane.

Such material may be synthesized by reacting an -OH or -SH functional polyalkylene oxide, such as a polyethylene diol with an isocyanate functional alkoxysilane compound. The hydroxyl group of the polyethylene diol reacts with the isocyanate group forming a urethane linkage. A representative reaction scheme is depicted as follows:

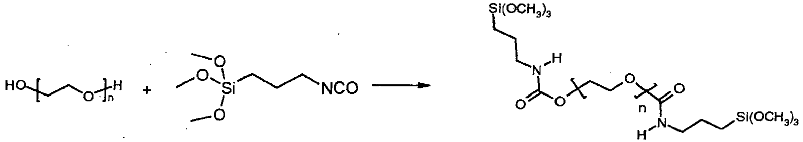

Other hydrophilic components comprise a polyalkylene oxide backbone and at least one alkoxy silane terminal group can be produce in the same manner from other polyalkylene oxide starting materials. The polyalkylene oxide backbone is bonded to the alkoxyl silane terminal group(s) with a linking group comprising a urethane or sulfur linkage. Such hydrophilic component has the general formula: 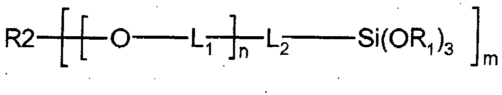
wherein R2 is a hydrocarbon residue having a valency of m,
for each n, L₁ is independently a straight-chain or branched C₂-C₆ alkylene; and
for each m, L₂ is independently a divalent linking group comprising a urethane or sulfur linkage.

R2 is typically a hydrocarbon residue of a polyalkylene oxide starting material and m typically is 1, 2, or 3. When m is 1, R2 is typically an alkyl group. When m is 2, R2 forms a part of an alkylene oxide repeat unit. When m is 3, R2 is a hydrocarbon residue comprising at least 3, 4, 5, or 6 carbon atoms and typically no greater than 12 carbon atoms. In some embodiments, R is a hydrocarbon residue, optionally further comprising one or more oxygen, sulfur or nitrogen atoms.

In some embodiments, L₁ is ethylene for each n. In other embodiments, L₁ is propylene for each n. In yet other embodiments, L₁ of the -[O-L₁]- repeat units comprise a combination of ethylene and propylene.

In some embodiments, n is at least 4, 5, 6, 7, 8, 9, or 10. In other embodiments, n is greater than 10 and the hydrophilic component has a molecular weight in the range previously described.

In some embodiments, L₂ comprises an oxygen or sulfur atom bonded to the alkylene oxide repeat unit and an alkylene group bonding the oxygen or sulfur to the terminal alkoxy silane group such as when L₂ is -OC(O)NH(CH₂)p or -S(CH₂)p, and p ranges from 1 to 6.

The release coating comprises a sufficient amount of hydrophilic (e.g. repeat) units to reduce the change in color and/or improve the retained brightness, relative to a release coating comprising the same polyorganosiloxane, yet in the absence of such hydrophilic component.

The amount of hydrophilic units, such as ethylene oxide repeat units, of the release coating is at least 15 wt-% or 20 wt-%, and in some embodiments at least 25 wt-% or 30 wt-%. Although release coatings comprising 10 wt-% of hydrophilic units can provide a marginal improvement in retained brightness, compositions with less than 10 wt-% of hydrophilic units are suitable for use as release coatings for other articles wherein the release-coated surface is not subject to dirt accumulation.

Then the amount of hydrophilic units of the release coating (e.g. derived from a PEG-silane) may be as little as 1, 2, 3, 4, 5, 6, 7, 8, or 9 wt-% solids of the release coating. In some embodiments, the amount of hydrophilic component utilized in the release coating corresponds to the amount of hydrophilic units in the release coating. This is the case when the hydrophilic component is substantially free of hydrophobic groups such as in the case of polyethylene oxide polymer and polyethylene glycols. However, when the hydrophilic component also comprises hydrophobic groups, such as in the case of the previously described polyethylene oxide alkoxy silane, the amount of hydrophilic units is less than the concentration of hydrophilic component

The amount of hydrophilic component is typically no greater than 90 wt-%, or 80 wt-%, or 70 wt-%, or 65 wt-%, or 60 wt-% of the dried coating composition. As the concentration of hydrophilic component (e.g. ethylene oxide repeat units) increases, the concentration of polyorganosiloxane decreases, which in turn reduces the release properties. Thus the concentration of polyorganosiloxane is at least 10 wt-%, 20 wt-%, 30 wt-%, 35 wt-%, and in some favored embodiments at 40 wt-%, 45 wt-% or 50 wt-%. The release properties can be measured according to the T-Peel adhesion test, described in greater detail in the forthcoming examples. In some embodiments, such as tape articles the average and/or max load is typically least 1, 1.5, or 2.0 N/dm and no greater than 20, or 15, or 10 N/dm. In some embodiments, the average and/or max load is no greater than 9, or 8, or 7 N/dm. The minimum load it typically 1 N/dm and in some embodiments 2, 3, or 4 N/dm. Although the T-peel force can vary depending on the adhesive, the release coating described herein can provide the target T-peel values with a variety of pressure sensitive adhesives, particularly those suitable for pavement markings.

When utilized in a reaction product, the hydrophilic (e.g. polyethylene oxide) component typically also has a relatively low molecular weight. In some embodiments, the hydrophilic (e.g. polyethylene oxide) component has a molecular weight of at least 100 g/mole, 200 g/mole, 300 g/mole, 400 g/mole, or 500 g/mole, or 1000 g/mole, or 15000 g/mole and typically no greater than 20,000 g/mole, or 10,000 g/mole, or 5,000 g/mole. In some embodiments, the hydrophilic component has a molecular weight no greater than 4,000 g/mole, or 3,000 g/mole, or 2,000 g/mole, or 1500 g/mole. However, when utilized as a mixture, the hydrophilic (e.g. polyethylene oxide) component may be a relatively high molecular weight solid polymer, e.g. having a molecular weight up to about 500,000 g/mole.

The sheeting articles described herein are typically made by providing a sheeting article comprising a (e.g. viewing) surface and applying the release coating to the surface. The release coating compositions may be applied to a sheeting substrate by most standard coating techniques, either as dilute solutions in organic or aqueous solvents or as neat liquids. Suitable solvents include but are not limited to volatile organic liquids which will dissolve the compositions of the invention, including but not limited to those solvents selected from the group consisting of alkanes, arenes, chlorinated hydrocarbons, lower alkanols, and mixtures thereof.

For embodiments wherein the coating composition is aqueous, the liquid of the coating contains at least 85 percent by weight of water. It may contain a higher amount of water such as, for example, at least 90, 95, or even at least 99 percent by weight of water or more. The aqueous liquid medium may comprise a mixture of water and one or more water-soluble organic cosolvent(s), in amounts such that the aqueous liquid medium forms a single phase. Examples of water-soluble organic cosolvents include methanol, ethanol, isopropanol, 2-methoxyethanol, 3-methoxypropanol, 1-methoxy-2-propanol, tetrahydrofuran, and ketone or ester solvents. In some embodiments, the amount of organic cosolvent does not exceed 15 wt-% of the total liquids of the coating composition.

The curable aqueous compositions can be prepared in the form of an emulsion by any of a variety of known mechanical or chemical emulsification techniques. Useful emulsification techniques include those described, for example, in European Patent Applications Nos. 0 268 982 (Toray Silicone Company, Ltd.), 0 459 500 (Dow Corning Corporation), and 0 698 633 (Dow Corning Corporation).

If a solvent is utilized, the release coating composition may be included in the solvent at a concentration as low as about 2 percent solids.

The curing of the functional polysiloxane occurs almost instantaneously upon evaporation of the solvent from the coated substrate. The temperatures required for this will vary, but generally will range from about 50°C. to about 150°C., preferably about 80°C. to about 110°C.

The release coating may be coated using standard coating techniques, such as gravure, offset gravure, and spraying. The thickness of the dried release coating is typically at least 0.5 or 1 micron microns. The thickness of the dried release coating is typically no greater than 100 microns and in some embodiments no greater than 50, or 25, or 10 microns.

In some embodiments, the method of making the sheeting further comprises applying a pressure sensitive adhesive to the opposing surface of the retroreflective sheeting article (either before or after applying the release coating). When the release coating provides a dual function of providing a surface coating on the article and functioning as a release coating for a PSA, the method further comprises contacting the release coating with the pressure sensitive adhesive. Typically, the release coating and pressure sensitive adhesive are contacted by winding the sheeting into a roll or cutting and stacking pieces of sheeting.

The release coating is suitable for use with various PSA types, such as those based on acrylates, tackified natural rubbers, and tackified synthetic elastomers.

In some embodiments, the adhesive comprises rubber and tackifier, as described for example in U.S. Patent No. 5,453,320. The rubber of the adhesive typically has a low glass transition temperature (Tg), ranging from about -120°C. and about -50°C. Illustrative examples of suitable elastomers include natural rubber, polyisoprene, polybutadiene, styrene butadiene, polyisobutylene, butyl rubber, and A-B-A block copolymers wherein B represents a rubbery midblock having a low Tg (as previously described) polyisoprene, polybutadiene, or poly(ethylene/butylene), and A represents a thermoplastic polystyrene end block.

Tackifiers used in pressure sensitive adhesive typically have a ring and ball softening point between about 70°C. and about 140°C. Illustrative examples include rosin and rosin derivatives, C5 and C9 hydrocarbon resins, as well as terpenes and terpene phenolic derivatives. Typically, the adhesive composition comprises at least 100 or 125 phr and no greater than 200 to 225 phr of tackifier per 100 parts of rubber.

When the sheeting is used for other purposes than as a pavement marking, the back surface of the sheeting may comprise other types of adhesives.

In other embodiments, the release coating may be used for articles wherein a pressure sensitive adhesive does not contact the release coating. In such embodiment, the release coating provides a surface that is resistant to dirt accumulation.

Adding a sufficient amount of hydrophilic units to a polyorganosiloxane release coating has been found to improve the retained brightness of the retroreflective viewing surface when the sheeting is exposed to dirt (using the dirt rolling method), as measured according to the test method described in the forthcoming examples. In some embodiments, the average brightness retention improves from about 30-40% to at 45%, 50%, or 55%. In some embodiments, the average brightness retention is at least 60%, 65%, 70%, 75%, 80%, or 85%. In some embodiments, such average brightness retention is achieved after both one and two cycles of subjecting the sheeting article to dirt-rolling. An improvement in average brightness retention was also obtained using another method of exposing dirt to the sheeting (i.e. placing the sheeting in carpet dirt).

Adding a sufficient amount of hydrophilic units to a polyorganosiloxane release coating has been found to improve the color retention of the viewing surface of the sheeting when exposed to dirt, as measured according to the test method described in the forthcoming examples. In some embodiments, the change in color (i.e. change in x or y chromaticity coordinate) is less than 0.020 or 0.015 and in some embodiments, less than 0.010, or 0.009, or 0.008, or 0.007, or 0.006, or 0.005. The release coating composition can be used as a coating on a retroreflective sheeting substrate as well as other (i.e. non-retroreflective) sheeting substrates comprising glass or ceramic beads at least partially embedded in a binder layer.

Particularly when the sheeting is retroreflective sheeting, it may be used for directing motorists by contacting the pressure sensitive adhesive of the sheeting to a pavement surface or other roadway infrastructure, such as guard rails, bridges, and the like.

Objects and advantages of this invention are further illustrated by the following examples, but the particular materials and amounts thereof recited in these examples, as well as other conditions and details, should not be construed to unduly limit this invention. These examples are merely for illustrative purposes only and are not meant to be limiting on the scope of the appended claims.

### Materials

Unless otherwise noted, all parts, percentages, ratios, etc., in the examples and in the remainder of the specification are by weight. Unless otherwise noted, all chemicals were obtained or are available from, chemical suppliers such as Aldrich Chemical Company, Milwaukee, WI.
"PDMS", methoxy terminated polydimethylsiloxane, obtained from Gelest Inc., Morrisville, PA under trade designation "DMS-XM11".
"DMS-S12" silanol terminated polydimethylsiloxane, obtained from Gelest Inc, Morrisville, PA under trade designation "DMS-S12".
"PEG-OH" Polyethyleneglycol, MW=600, obtained from Aldrich Chemical Company, Milwaukee, WI.
"PEG-OH" Polyethyleneglycol, MW=2500, obtained from Aldrich Chemical Company, Milwaukee, WI.
"IPTMS" 3-Isocyanatopropyltrimethoxysilane, obtained from Aldrich Chemical Company, Milwaukee, WI.
"DBTDL" dibutyltin dilaurate, obtained from Aldrich Chemical Company, Milwaukee, WI.
"THF" tetrahydrofuran, obtained from Aldrich Chemical Company, Milwaukee, WI.
"IPA" isopropyl alcohol, was obtained from EMD Chemicals, Gibbstown, NJ
"Syl-Off 1181" aqueous emulsion of hydroxyl terminated dimethyl siloxane, obtained from Dow Corning Corporation, Midland MI.
"Syl-Off 1171-A" organotin catalyst from Dow Corning Corporation, Midland, MI.
"Q2-5211 Superwetter" hydroxyl terminated, ethoxylated 3-(3-hydroxypropyl)-heptamethyltrisiloxane, obtained from Dow Corning Corporation, Midland, MI.
Polyvinyl alcohol, commercially available from Kuraray under the trade designation "Kuraray Poval R-2105".**Method for T-Peel Test (Adhesion)**

This test was conducted according to ASTM D1876-08 except that only one or two specimens per sample were tested. A 10 cm x about 15 cm (4 inches x 6 inches) test specimen was cut from each of the exemplified pavement marking tape described below. The viewing surface of the test specimens was laminated to the adhesive-coated surface of a pavement marking tape (obtained under trade designation "3M™ Stamark™ High Performance Pavement Marking Tape Series 380IES" from 3M Company, St. Paul, MN) using two roll rubber/steel laminator at a pressure of 275.8 kPa. The laminates were passed through the rollers twice. Before laminating, the liner was removed from the adhesive tape and the adhesive side of the tape was facing the topside of the test specimens. After laminating the test specimens were conditioned in a 150°F oven for 5 days. The temperature of the room was 23°C and at 50% relative humidity (RH). Then, the laminate (adhesive tape and the specimen) were pulled apart about 2.5 cm (1 inch) so as to attach them to upper and lower jaws of a peel tester (Model 1122, obtained from Instron^{R}, Norwood, MA). The test specimen and the adhesive tape were mounted on top and lower jaws of the tester, respectively. The force to separate the laminates was measured at a crosshead speed of about 30 cm per minute (12 inches per minute). This force was measured in pounds-force per inch and then converted to Newtons per decimeter (N/dm).

### Method of Dirt-Rolling

For this test, test specimens prepared in Examples and Comparative Examples described below were cut to about 5 cm x 5 cm (2 inches x 2 inches) squares. The specimens were placed in a 1.89 Liter (0.5 gallon) NALGENE bottle, one at a time, that was filled with 100 grams of Arizona dirt. The NALGENE bottle and its content were rolled for 2 minutes at roughly 50 rounds per minute.

### Method for Measuring Brightness Retention

Retroreflective brightness, Ra, of the specimens was measured before and after the dirt rolling using a retroluminometer. The Ra in Cd/m²/lux was determined according to the procedure established in Procedure B of ASTM Standard E 809-94a, measured at an entrance angle of -4.0 degrees and an observation angle of 0.2 degrees. The photometer used for those measurements is described in U.S. Defensive Publication No. T987,003.

The brightness was measured before and after subjecting the samples to dirt-rolling, as described above. Samples with higher brightness retention percentages after dirt-rolling indicate lower dirt pick up.

### Method for Measuring Color Change

Chromaticity coordinates (x,y) for the specimens were measured before and after the dirt rolling using a Hunter spectrophotometer obtained from HunterLab, Reston, VA under the trade designation "ColorFlex EZ".

The color change was measured before and after subjecting the samples to dirt-rolling, as described above. Samples with less color change after dirt-rolling indicate lower dirt pick up.

### Preparation of Functionalized Polyethyleneoxide

### Preparative Example 1

### Synthesis of PEG-Silane (MW 1100)

An oven-dried 500 mL Erlenmeyer flask containing N₂ inlet, and condensers was immersed in an oil bath and was charged with PEG-OH (Mw = 600) (20grams, 0.033 mol), IPTMS (13.68 grams, 0.066 mol), DBTDL (2 drops), and THF (175 grams). The solution was degassed for 10 minutes using N₂ and then capped and stirred at 70°C (oil bath temperature) for 12 hours. The reaction mixture was cooled and filtered using a WHATMAN 40 filter paper and excess THF was evaporated using a rotary evaporator. The neat solution was analyzed by IR spectroscopy to confirm the disappearance of NCO peak.

### Preparative Example 2

### Synthesis of PEG-Silane (MW 2910)

The same process as described above for Preparative Example 1 was repeated except by using PEG-OH (MW 2500) (20g, 0.008 moles), IPTMS (3.28 g, 0.016 mol), and THF (125 g).

### Preparation of Release Coating Formulations

The release coating formulation used in Examples below were prepared by mixing indicated amounts of components with 98 grams of isopropyl alcohol and 1 drop of hydrochloric acid in a plastic bottle and stirring it for 16 hours at room temperature. The coating formulations including wt. % of polyethylene oxide (PEO) and PDMS and the amount (in grams) of each of the components are summarized in Table 1, below

**Table 1 - Release Coating Formulations**

| Formulation | Wt. % PEO | PDMS (wt-%) | PEG-OH (MW 600) | PEG-OH (MW 2500), | Prep. Ex. 1, | Prep. Ex. 2 |
|---|---|---|---|---|---|---|
| 1 | 50 | 1 g (50) | 1 g | 0 | 0 | 0 |
| 2 | 50 | 1 g (50) | 0 | 1 g | 0 | 0 |
| 3 | 30 | 1 g (70) | 0 | 0 | 1 g | 0 |
| 4 | 43 | 1 g (57) | 0 | 0 | 0 | 1 g |

The release coating formulations were applied to the retroreflective viewing surface of a pavement marking tape by dip coating the tape in the release coating. After coating the coated tapes were air dried for 30 minutes followed by heating at 110°C for 3 minutes.

For Example 5, a UV-curable composition was prepared by mixing 1g of DMS-S12 (silanol terminated polydimethylsiloxane from Gelest Inc, Morrisville, PA) with 1 g of PEG-silane (as described in Preparative Example 2) in 98 g of isopropyl alcohol with 0.1g of UV acid (bisdodecyl phenyl iodonium hexafluoroantimonate, obtained from Gelest Inc., Morrisville, PA). After coating, the coated tapes were attached to a backer board and then passed twice through an ultraviolet (UV) process chamber (Model MC-6RQN, available from Fusion UV Systems, Inc., Gaithersburg, Maryland) equipped with a 200 Watts per centimeter, mercury lamp (H-bulb) at a rate of 12 meters per minute. The lamp was positioned about 15 cm above the coated film.

Each of the release coatings of Examples 1-5 were applied to a pavement marking tape at a (dried) thickness of about 1 micron. With reference to FIG. 1, the pavement marking tape comprised a base sheet 102 (a white base layer material as described in Example 75 of U.S. Patent No. 6,479,132) having a scrim 113 and a pressure sensitive adhesive layer on the back surface. The pressure sensitive adhesive layer comprised about 40 wt-% polybutadiene rubber (TAKTENE™ 220S) about 50 wt-% tackifier (PICCOLYTE™ A135), and about 10 wt-% filler. The retroreflective viewing surface comprised a binder layer 115 comprising partially embedded microspheres on the side surfaces. The binder layer was a polyurethane prepared from 35.0% pearlescent pigment (AFFLAIR™ 9119, available from EM Industries, Inc., Hawthorne, NY); 22.3% TONE™ 0301 polyester; and 42.7% DESMODUR™ N-100 aliphatic polyisocyanate. The tape was a patterned tape having a plurality of protrusions as shown in FIG. 2, having a height about 1.5 mm greater than the planar region between protrusions.

The examples were tested for their brightness retention, release properties and color change due to dirt pick up using methods described above. The results are reported in the following tables.

**Table 2 - Brightness Retention**

| Formulation | Brightness before dirt-rolling (Cd/m2/lux) | Brightness after dirt-rolling (Cd/m2/lux) | % Brightness retention | Average % brightness retention |
|---|---|---|---|---|
| 1 | 3.7 | 2.9 | 78 | 76 |
| 1 | 3.4 | 2.5 | 74 | |
| 2 | 4.4 | 2.2 | 50 | 46 |
| 2 | 4.1 | 1.7 | 41 | |
| 3 | 3.7 | 2.2 | 59 | 57 |
| 3 | 3.3 | 1.8 | 55 | |
| 4 | 4.4 | 3.6 | 82 | 83 |
| 4 | 4.05 | 3.4 | 84 | |
| 5 | 3.8 | 2.4 | 63 | 63 |

Example 4 was subjected to a second cycle of dirt-rolling. The brightness retention was 82%, about the same as after one cycle of dirt rolling.

**Table 4 - Release Properties**

| T-Peel Adhesion | | | |
|---|---|---|---|
| Example | Max Load (N/dm) | Min. Load (N/dm) | Average Load (N/dm) |
| Ex. 1 | 4.553 | 1.401 | 2.452 |
| Ex. 2 | 5.254 | 1.751 | 2.977 |
| Ex. 3 | 2.277 | 1.051 | 1.226 |
| Ex. 4 | 52.89 | 21.01 | 32.75 |

**Table 5 - Color Change**

| Chromaticity coordinates (color) | Coating | Before dirt rolling | After dirt rolling | Change in chromaticity coordinate with dirt rolling |
|---|---|---|---|---|
| X coordinate, D65 | | | | |
| 10° | | | | 0 |
| | Ex. 1 | 0.509 | 0.495 | 0.014 |
| | Ex. 2 | 0.504 | 0.497 | 0.007 |
| | Ex. 3 | 0.516 | 0.493 | 0.023 |
| | Ex. 4 | 0.505 | 0.501 | 0.004 |

| Y coordinate, D65 | | | | |
|---|---|---|---|---|
| 10° | | | | |
| | Ex. 1 | 0.434 | 0.428 | 0.006 |
| | Ex. 2 | 0.433 | 0.428 | 0.005 |
| | Ex. 3 | 0.439 | 0.425 | 0.014 |
| | Ex. 4 | 0.433 | 0.430 | 0.003 |

Formulations 6-7 were made by blending other hydrophilic polymers with a different polyorganosiloxane. The wt % of the coating components in water are summarized in the table below. The calculated weight percent of hydrophilic solids is also reported.

**Table 6 - Release Coating Formulations**

| | Wt. % hydrophilic solids | Syl-Off 1181 (wt-%) | Syl-Off Catalyst 1171 A (wt-%) | Q2-5211 Superwetter | Sodium carboxymethyl cellulose (Mw = 30,000) | Hydroxyethyl cellulose (Mw = 90,000) |
|---|---|---|---|---|---|---|
| 6 | 18 | 5.02 (72.16) | 0.33 (5.92) | 0.11 (3.95) | 0 | 0.5 |
| 7 | 30.65 | 4.99 (61.21) | 0.33 (5.05) | 0.10 (3.07) | 1 | 0 |

The release coatings of Examples 6 and 7 were also coated onto the viewing surface of a pavement marking as previously described at a dried thickness of about 5 microns. These samples were placed in a bag full of carpet dirt for 5 minutes. Samples were removed from the bag and loose dirt was removed using a vacuum cleaner and tested for brightness retention.

**Table 7 - Brightness Retention**

| Example | Brightness before dirt-rolling (Cd/m2/lux) | Brightness after dirt-rolling (Cd/m2/lux) | % Brightness retention |
|---|---|---|---|
| 6 | 6.58 | 2.64 | 40 |
| 7 | 5.07 | 1.91 | 37.6 |

### Preparative Example 3

### Synthesis of PEG-silane (MW 1176)

An oven-dried 500 mL Erlenmeyer flask containing N₂ inlet, and condensers was immersed in an oil bath and was charged with PEG-OH (Carbowax 1000 from Dow Chemical) (33.33g, 0.033 mol), IPTMS (13.68 g, 0.066 mol), DBTDL (2 drops), and THF (175g). The solution was degassed for 10 minutes using N₂ and then capped and stirred at 70°C (oil bath temperature) for 12 hours. The reaction mixture was cooled and filtered using a Watman 40 filter paper and excess THF was evaporated using a rota evaporator. The neat solution was analyzed by IR for the disappearance of NCO peak.

### Preparative Example 3

### Synthesis of PEG-silane (MW 1714)

An oven-dried 500 mL Erlenmeyer flask containing N₂ inlet, and condensers was immersed in an oil bath and was charged with PEG-OH (Carbowax 1450 from Dow Chemical) (48.32g, 0.033 mol), IPTMS (13.68 g, 0.066 mol), DBTDL (2 drops), and THF (175g). The solution was degassed for 10 minutes using N₂ and then capped and stirred at 70°C (oil bath temperature) for 12 hours. The reaction mixture was cooled and filtered using a Watman 40 filter paper and excess THF was evaporated using a rota evaporator. The neat solution was analyzed by IR for the disappearance of NCO peak.

### Formulations 8-14

Stochiometric amounts of DI water, Syl-off 1181 (or PDMS), PEG silane MW 1000, and 5% HCl catalyst were added to a glass beaker. DI water was added first, then PEG silane, followed by hand mixing and 5 seconds of using a fixed speed vortex mixer. Once the PEG silane was dissolved, 1181 was added and was mixed using a fixed speed vortex mixer for 5 seconds. Finally, 5% HCl was slowly added in an equal amount to 5% the weight of solids in the solution. Although the solute proportions varied, each solution was kept at 2% by solids (for example, 1.6% 1181 and 0.4% PEG, or 1% 1181 and 1% PEG). The formulations were as follows.

| Ex. | Description | Syl-Off 1181 g | PEG silane (MW 1000) g | PEG silane (MW 1450) g | 5% HCl g | Water g |
|---|---|---|---|---|---|---|
| 8 | Syl-Off 118 1:PEG silane 8:1 in Water | 1.78 | 0.22 | 0 | 2 | 98 |
| 9 | Syl-Off 1181:PEG silane 4:1 in Water | 1.6 | 0.4 | 0 | 2 | 98 |
| 10 | Syl-Off 1181:PEG silane 1:1 in Water | 1 | 1 | 0 | 2 | 98 |
| 11 | Syl-Off 1181:PEG silane 1:4 in Water | 0.4 | 1.6 | 0 | 2 | 98 |
| 12 | Syl-Off 1181:PEG silane 1:8 in Water | 0.22 | 1.78 | 0 | 2 | 98 |
| 13 | Syl-Off 1181:PEG silane 1:1 in Water | 1 | 0 | 1 | 2 | 98 |
| 14 | Syl-Off 1181:PEG silane 8:1 in Water | 0.4 | 0 | 1.6 | 2 | 98 |

The release coating formulations were applied to the retroreflective viewing surface of a pavement marking tape by dip coating the tape in the release coating in the same manner as Example 1-5 except that the coated tapes were air dried for 5 minutes and then cured for 5 minutes at 130°C.

The wt-% solids of each of the components of the dried and cured release coating were as follows:

| Example | Syl-Off 1181, wt% | PEG silane (MW 1000), wt% | PEG silane (MW 1450), wt% | Kuraray Poval R-2105, wt-% |
|---|---|---|---|---|
| 8 | 89.0 | 11.0 | 0 | |
| 9 | 80.0 | 20.0 | 0 | |
| 10 | 50.0 | 50.0 | 0 | |
| 11 | 20.0 | 80.0 | 0 | |
| 12 | 11.0 | 89.0 | 0 | |
| 13 | 50.0 | 0 | 50.0 | |
| 14 | 20.0 | 0 | 80.0 | |
| 15 | 91.7 | 8.3 | | |
| 16 | 50 | | | 50 |

The examples were tested for their brightness retention due to dirt pick up and release properties using the previously described methods. The results are reported in the following tables.

| Ex. | % Brightness retention | Release Properties T- Peel Adhesion, lbf/in (N/dm) |
|---|---|---|
| 8 | 49 | 0.67 (11.7) |
| 9 | 60 | 0.649 (11.4) |
| 10 | 68 | 0.738 (12.9) |
| 11 | 74 | 1.305 (22.9) |
| 12 | 84 | 1.471 (25.8) |
| 13 | 62 | 0.675 (11.8) |
| 14 | 71 | 1.497 (26.2) |
| 15 | 36 | 0.26 (4.5) |
| 16 | 44 | 0.62 (10.8) |

Although Example 15 is a comparative example for retroreflective sheeting due to the relatively low brightness retention, such composition may be suitable for use as a release coating for other articles wherein the release coated surface is not subject to dirt accumulation.

## Claims

1. A retroreflective sheeting article comprising a retroreflective viewing surface wherein the retroreflective viewing surface comprising a release coating, the release coating comprising polyorganosiloxane and at least 15 wt-% of hydrophilic units.

2. The retroreflective sheeting article of claim 1 wherein the release coating is a reaction product of at least one polyorganosiloxane polymer comprising at least one first functional group and at least one hydrophilic component having a second functional group, wherein the first and second functional groups covalently bond.

3. The retroreflective sheeting article of claim 2 wherein first and second functional groups are selected from silanol and alkoxy silane.

4. The retroreflective sheeting article of claims 1-3 wherein the release coating is a mixture of at least one polyorganosiloxane polymer and at least one hydrophilic component.

5. The retroreflective sheeting article of the previous claims wherein the polyorganosiloxane is a fluid having a molecular weight ranging from 500 to 10,000 g/mole.

6. The retroreflective sheeting of claims 1-4 wherein the hydrophilic component comprises ethylene oxide repeat units.

7. The retroreflective sheeting article of claims 1-6 wherein the hydrophilic component has a molecular weight ranging from 500 to 500,000 g/mole.

8. The retroreflective sheeting article of claims 2-7 wherein the hydrophilic component has the structure 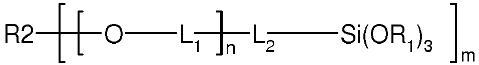
wherein R2 is a hydrocarbon residue having a valency of m,
for each n, L₁ is independently a straight-chain or branched C₂-C₆ alkylene; and
for each m, L₂ is independently a divalent linking group comprising a urethane or sulfur linkage.

9. The retroreflective sheeting article of claims 2-7 wherein the hydrophilic component has the structure

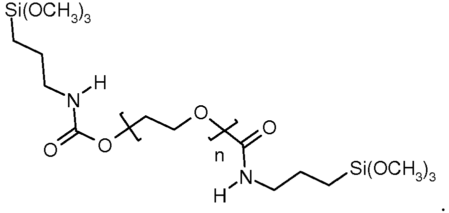

10. The retroreflective sheeting article of the previous claims wherein the pressure sensitive adhesive is a rubber-based or acrylic adhesive.

11. The retroreflective sheeting article of the previous claims wherein the retroreflective viewing surface comprises a reflective binder layer and glass or ceramic beads partially embedded in the binder layer.

12. The retroreflective sheeting article of claim 11 wherein the retroreflective viewing surface comprising a plurality of protrusions and the having side surfaces wherein the side surfaces comprise the bead bond layer and beads.

13. The retroreflective sheeting article of the previous claims wherein the article is a pavement making tape.

## Patentansprüche

1. Ein retroreflektierender flächenförmiger Gegenstand, der eine retroreflektierende Sichtoberfläche umfasst, wobei die retroreflektierende Sichtoberfläche eine Trennbeschichtung umfasst, wobei die Trennbeschichtung Polyorganosiloxan und mindestens 15 Gew.-% hydrophile Einheiten umfasst.

2. Der retroreflektierende flächenförmige Gegenstand nach Anspruch 1, wobei die Trennbeschichtung ein Reaktionsprodukt von mindestens einem Polyorganosiloxanpolymer, das mindestens eine erste funktionelle Gruppe umfasst und mindestens einem hydrophilen Bestandteil mit einer zweiten funktionellen Gruppe, ist, wobei die erste und zweite funktionelle Gruppe kovalent binden.

3. Der retroreflektierende flächenförmige Gegenstand nach Anspruch 2, wobei die ersten und die zweiten funktionelle Gruppen ausgewählt sind aus Silanol und Alkoxysilan.

4. Der retroreflektierende flächenförmige Gegenstand nach den Ansprüchen 1 bis 3, wobei die Trennbeschichtung eine Mischung aus mindestens einem Polyorganosiloxanpolymer und mindestens einem hydrophilen Bestandteil ist.

5. Der retroreflektierende flächenförmige Gegenstand nach den vorstehenden Ansprüchen, wobei das Polyorganosiloxan ein Fluid mit einem Molekulargewicht im Bereich von 500 bis 10.000 g/Mol ist.

6. Der retroreflektierende flächenförmige Gegenstand nach den Ansprüchen 1 bis 4, wobei der hydrophile Bestandteil Ethylenoxid-Wiederholungseinheiten umfasst.

7. Der retroreflektierende flächenförmige Gegenstand nach den Ansprüchen 1 bis 6, wobei der hydrophile Bestandteil ein Molekulargewicht im Bereich von 500 bis 500.000 g/Mol aufweist.

8. Der retroreflektierende flächenförmige Gegenstand nach den Ansprüchen 2 bis 7, wobei der hydrophile Bestandteil die Struktur aufweist: 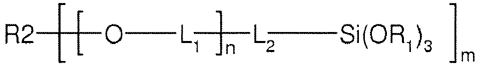
worin R2 ein Kohlenwasserstoffrest mit einer Wertigkeit von m ist,
L₁ für jedes n unabhängig ein geradkettiges oder verzweigtes C₂-C₆-Alkylen ist; und
L₂ für jedes m unabhängig eine zweiwertige Verknüpfungsgruppe ist, die eine Urethan- oder Schwefelbindung umfasst.

9. Der retroreflektierende flächenförmige Gegenstand nach den Ansprüchen 2 bis 7, wobei der hydrophile Bestandteil die Struktur aufweist:

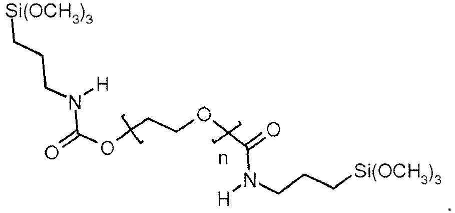

10. Der retroreflektierende flächenförmige Gegenstand nach den vorstehenden Ansprüchen, wobei der Haftklebstoff ein kautschukbasierter oder Acryl-Klebstoff ist.

11. Der retroreflektierende flächenförmige Gegenstand nach den vorstehenden Ansprüchen, wobei die retroreflektierende Sichtoberfläche eine reflektierende Bindemittelschicht und Glas- oder Keramikkügelchen, die teilweise in die Bindemittelschicht eingebettet sind, umfasst.

12. Der retroreflektierende flächenförmige Gegenstand nach Anspruch 11, wobei die retroreflektierende Sichtoberfläche eine Vielzahl von Vorsprüngen umfasst und diese Seitenflächen aufweisen, wobei die Seitenflächen die Kügelchenbindungsschicht und die Kügelchen umfassen.

13. Der retroreflektierende flächenförmige Gegenstand nach den vorstehenden Ansprüchen, wobei der Gegenstand ein Fahrbahnmarkierungsband ist.

## Revendications

1. Article en feuille rétroréfléchissant comprenant une surface de visualisation rétroréfléchissante, dans lequel la surface de visualisation rétroréfléchissante comprend un revêtement antiadhésif, le revêtement antiadhésif comprenant un polyorganosiloxane et au moins 15 % en poids de motifs hydrophiles.

2. Article en feuille rétroréfléchissant selon la revendication 1, dans lequel le revêtement antiadhésif est un produit de réaction d'au moins un polymère polyorganosiloxane comprenant au moins un premier groupe fonctionnel et au moins un composant hydrophile ayant un deuxième groupe fonctionnel, dans lequel les premier et deuxième groupes fonctionnels se lient par covalence.

3. Article en feuille rétroréfléchissant selon la revendication 2, dans lequel les premier et deuxième groupes fonctionnels sont choisis parmi silanol et alcoxysilane.

4. Article en feuille rétroréfléchissant selon les revendications 1 à 3, dans lequel le revêtement antiadhésif est un mélange d'au moins un polymère polyorganosiloxane et d'au moins un composant hydrophile.

5. Article en feuille rétroréfléchissant selon les revendications précédentes, dans lequel le polyorganosiloxane est un fluide ayant une masse moléculaire allant de 500 à 10 000 g/mole.

6. Article en feuille rétroréfléchissant selon les revendications 1 à 4, dans lequel le composant hydrophile comprend des motifs de répétition oxyde d'éthylène.

7. Article en feuille rétroréfléchissant selon les revendications 1 à 6, dans lequel le composant hydrophile a une masse moléculaire allant de 500 à 500 000 g/mole.

8. Article en feuille rétroréfléchissant selon les revendications 2 à 7, dans lequel le composant hydrophile a la structure 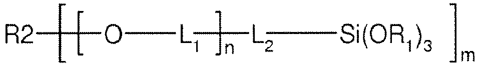
dans lequel R2 est un résidu hydrocarboné ayant une valence de m,
pour chaque n, L₁ est indépendamment un alkylène en C₂ à C₆ à chaîne linéaire ou ramifié ; et
pour chaque m, L₂ est indépendamment un groupe de liaison divalent comprenant une liaison uréthane ou soufre.

9. Article en feuille rétroréfléchissant selon les revendications 2 à 7, dans lequel le composant hydrophile a la structure

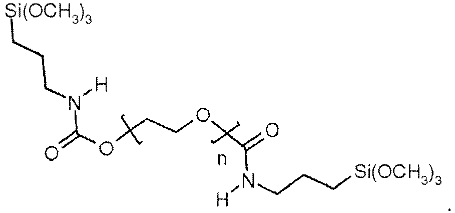

10. Article en feuille rétroréfléchissant selon les revendications précédentes, dans lequel l'adhésif sensible à la pression est un adhésif à base de caoutchouc ou acrylique.

11. Article en feuille rétroréfléchissant selon les revendications précédentes, dans lequel la surface de visualisation rétroréfléchissante comprend une couche de liant réfléchissante et des perles de verre ou de céramique partiellement intégrées dans la couche de liant.

12. Article en feuille rétroréfléchissant selon la revendication 11, dans lequel la surface de visualisation rétroréfléchissante comprenant une pluralité de parties saillantes et ayant des surfaces latérales dans lequel les surfaces latérales comprennent la couche de liaison de perles et des perles.

13. Article en feuille rétroréfléchissant selon les revendications précédentes, dans lequel l'article est un ruban de marquage de chaussée.
